# EUROPÄISCHE PATENTANMELDUNG

(11) **EP 0 955 537 A2**
(43) Veröffentlichungstag der Anmeldung: **10.11.1999**
(21) Anmeldenummer: 99104688.9
(22) Anmeldetag: 10.03.1999
(51) Int. Cl.: G01N 21/88

(54) **Einrichtung zur Überprüfung einer Oberfläche**

(30) Priorität: 08.05.1998 DE 19820536
(71) Anmelder: Dr.Ing. h.c.F. Porsche Aktiengesellschaft, 70435 Stuttgart (DE)
(72) Erfinder: Hoffarth, Günter, 71287 Weissach (DE); Ringler, Ralf, 74632 Neuenstein (DE)

(57) **Zusammenfassung**

Diese Einrichtung ist insbesondere zur Uberprüfung einer Lackoberfläche eines Kraftfahrzeuges geeignet und umfaßt einen Boden, der Leuchtkörper auweist. Diese Leuchtkörper begrenzen Längsseiten eines Aufbaus des Kraftfahrzeugs und strahlen ihn an. Der Boden ist mit Bodenlinien versehen, die quer zur Fahrzeuglängsrichtung verlaufen. Diese Bodenlinien spiegeln sich dank der Leuchtkörper als Linienmuster im Lack der Oberfläche des Kraftfahrzeugs und dienen zur Festellung, inwieweit besagte Oberfläche eine oder mehrere Unregelmäßigkeiten - Delle, Welle, Beule - aufweist. Diese Überprüfung erfolgt durch eine Prüfperson, und zwar durch Augenscheinnahme.

## Beschreibung

Die Erfindung bezieht sich auf eine Einrichtung zur Überprüfung einer Oberfläche nach dem Oberbegriff des Patentanspruchs 1.

Die qualitative Überprüfung von lackierten Oberflächen, zum Beispiel solchen von Kraftfahrzeug-Aufbauten, ist für die Produktgüte, die beachtliche Kundenrelevanz hat, von herausragender Wichtigkeit. Die Produktgüte zu verbessern ist folglich ein pemanent bedeutsames, vor allem wettbewerbsrelevantes Anliegen für Unternehmen.

Aufgabe der Erfindung ist es daher, eine Einrichtung zur Überprüfung von lackierten Oberflächen zu schaffen, mit der Unebenheiten von Flächenteilen, Farbstrukturmängel oder dgl. rasch und relativ sicher definierbar sind.

Erfindungsgemäß wird diese Aufgabe durch die Mekmale des Patentanspruchs 1 gelöst. Weitere, die Erfindung ausgstaltenden Merkmale sind in den Unteransprüchen enthalten.

Die mit der Erfindung hauptsächlich erzielten Vorteile sind darin zu sehen, daß die hellbunten Bodenlinien sich kontrastreich vom buntdunklen Boden abheben, wobei die Beleuchtungskörper die Bodenlinien auf der Lackoberfläche eines Kraftfahrzeug-Aufbaus als spiegelnde Linienmuster zeichnen, beispielsweise im Seitenteilbereich unterhalb der Gürtellinie, durch die vermittels von Augenbewegungen
- senkrecht und schräg zur Oberfläche des Aufbaus - über diese Lackoberfläche eine Prüfperson nicht nur störende konkave und konvexe Flächenunebenheiten (Delle, Welle, Beule), sondern auch Farbabweichungen (Farbechtheit, Farbunterschied; Magerlackierung z.B. bei dunkelblau tritt hellblau zutage) rasch und mit hinreichender Sicherheit feststellen kann. Die Linienmuster verzeichnen für die Prüfperson sichtbar besagte Oberflächenunregelmäßigkeiten. Die Bauteile der Einrichtung sind im Aufbau einfach und lassen sich proplemlos darstellen. Schließlich wird mit den Beleuchtungskörpern der Deckenbeleuchtung ebenfalls ein Linienmuster auf der Lackoberfläche erzeugt, mit denen sich Unregelmäßigkeiten der Oberfläche bzw. der Farbe durch visuelle Beobachtungen der Prüfperson erkennen lassen, und zwar an der Oberseite des Aufbaus - Hauben, Kotflügel, Dach, Heck -.

In der Zeichnung wird ein Ausführungsbeispiel der Erfindung gezeigt , das nachstehend näher beschrieben ist.

Es zeigen:
- Fig. 1: eine Ansicht von oben auf die erfindungsgemäße Einrichtung zur Prüfung einer Lackoberfläche eines Kraftfahrzeuges,
- Fig. 2: eine Ansicht in Pfeilrichtung X der Fig. 1,
- Fig. 3: eine Seitenansicht der Einrichtung,
- Fig. 4: eine Schrägansicht von vorne auf die Längsseite des Kraftfahrzeuges und
- Fig. 5: eine Schrägansicht von vorne oben auf den Bug und das Dach des Kraftfahrzeuges.

Eine mobile oder feststehende Einrichtung 1 ist beipielsweise Bestandteil einer Inspektionsanlage, dient zur Überprüfung einer lackierten Oberfläche 2 eins Kraftfahrzeugs 3 und ist in einem nicht näher gezeigten Gebäude untergebracht; sie kann aber auch im Freien stehen. Das einen Aufbau 4 aufweisende Kraftfahrzeug 3 ist auf einem Boden 5 der Einrichtung 1 festgelegt. Beabstandet zu Längsseiten 6, 7 des Kraftfahrzeuges 3 sind seitliche Beleuchtungskörper 8, 9, die nach Inbetriebnahme die Oberfläche 2, insbesondere die Längsseiten 6, 7 des besagten Aufbaus anstrahlen.

Der Boden 5 - Länge ca. 6000 mm, Breite zwischen den Beleuchtungskörpern 7,8 ca. 500 mm - weist einen buntdunklen Farbton, auf der vorzugsweise bassaftgrau oder schiefergrau ist. Darüber hinaus ist der Boden 5 mit einer Vielzahl von Bodenlinien Bl versehen, die quer zur Fahrzeuglängsrichtung A-A verlaufen. Die hellbunten, z. B. gelben Farbton aufweisenden Bodenlinien Bl können vertieft oder erhaben ausgebildet sein. Der Abstand AsI zwischen den einzelnen Bodenlinien beträgt zwischen 90 und 170 mm, wobei die Bodenlinien Bl selbst eine Dicke Di von 1,5 bis 4,5 mm aufweisen. Sebstverständlich sind für den Abstand AsI und die Dicke Di auch andere Abmessungen vorstellbar.

Die Beleuchtungskörper 8, 9 sind mit handelsüblichen Neonröhren 10, 11 ausgestattet, die senkrecht übereinanderliegen und in einem Gehäuse 12 angeordnet sind. Zur Intensivierung der Leuchtstärke der Neonröhren 10, 11 sind im Gehäuse 12 Streuscheiben 13, 14 vorgesehen. Das Gehäuse 12 ist auf der dem Kraftfahrzeug 3 zugewandten Seite 15 mit einer Milchglasscheibe 16 versehen, die einerseits zur Optimierung einer gleichmäßigen Lichtverteilung beiträgt und andererseits das Gehäuse 12 abdeckt.

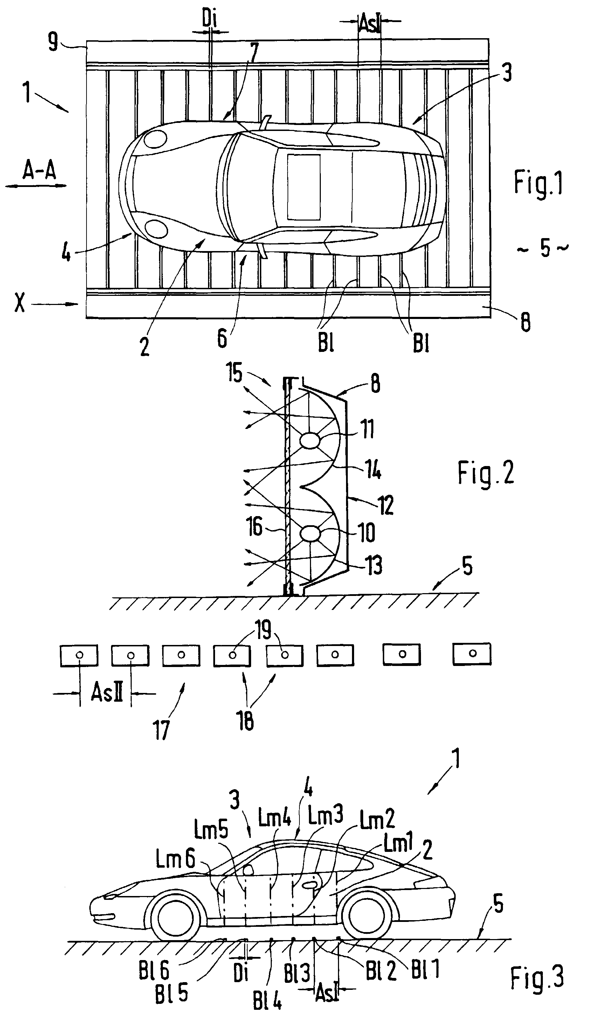

Oberhalb des Kraftfahrzeugs 3 ist die Einrchtung 1 mit einer Deckenbeleuchtung 17 versehen - Fig. 3 -. Sie umfaßt mehre quer zur Fahrzeuglängsrichtung A-A angeordnete Beleuchtungskörper 18, in denen ebenfalls handesübliche Neonröhren 19 untergebracht sind. Der Abstand AsII zwischen den einzelnen Beleuchtungskörpern 18 beträgt zwischen 250 und 700 mm; er kann natürlich fallweise auch anders bemessen sein.

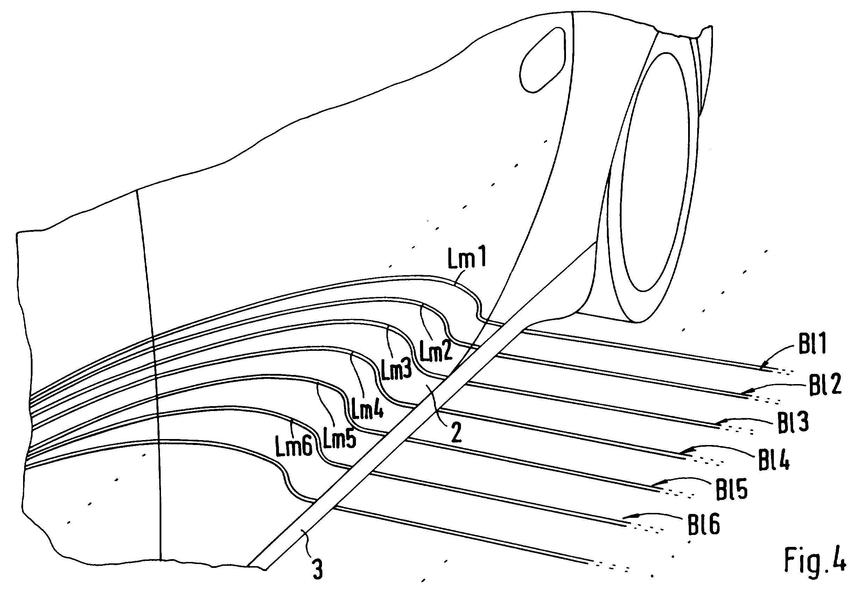

Beim Prüfen der Längsseiten der Oberfläche 2 des Kraftfahrzeugs 3 spiegeln sich - sofern eine Prüfperson senkrecht auf die Längsseite blickt - die Bodenlinien Bl aufgrund der Tiefglanzeigenschaften des Lacks als senkrechte Linienmuster Lm am Lack der Oberfläche ab - Fig. 3 -. Dabei entsprechen die Bodenlinien Bl1 - Bl6 den Linienmustern Lm1 - Lm6. Durch Hin- und Herbewegen mit ihren Augen Kann die Prüfperson Unregelmäßigkeiten z. B Delle, Welle, Bäule oder dgl. in der Lackoberfläche feststellen, da die Linienmuster Lm durch Verzeichnungen besagte Unregelmäßigkeitn sichtbar machen. Augenscheinlich wird dies auch, wenn die Prüfung aus einer Schrägansicht vorgenommen wird - Fig. 4 -. Unter diesen Bedingungen bilden sich die Bodenliien Bl1-B6 deutlich erkennbar als Linienmuster Lm1-Lm6 an der Oberfläche 2 ab des Kraftfahrzeugs ab. Die Linienmuster Lm1-Lm6 weisen einen sich ständig wechselnden Kurvenverlauf auf, der durch die Form der Oberfläche 2 des Aufbaus definiert ist.

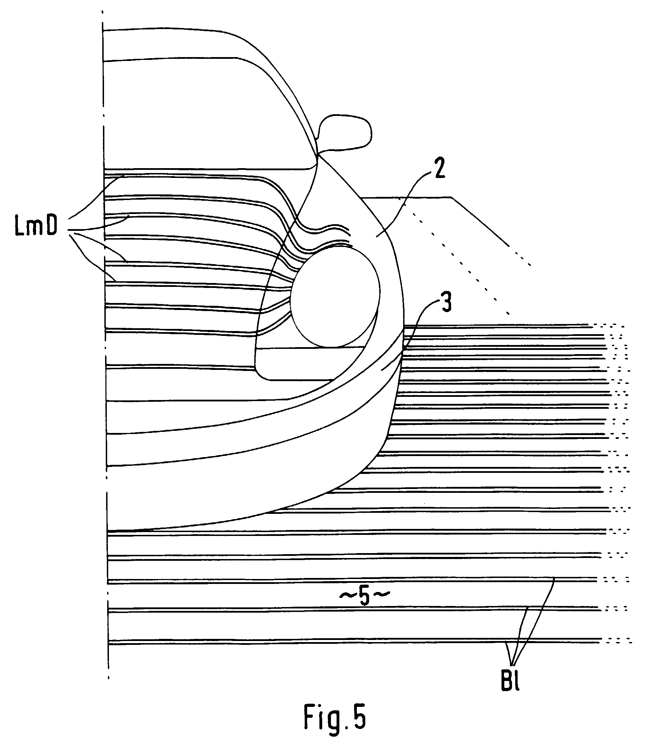

Eine sinngemäße Prüfung ist an der Hauben-, Dach- und Heckteil- Oberfläche des Kraftfahrzeugs 3 - Fig. 5 - durch die Beleuchtungskörper 18 möglich, die eine vergleichbare Abbildung zur Erkennung von Oberflächenunregmäßigkeiten erzeugen, und zwar mit Linienmustern LmD.

## Patentansprüche

1. Einrichtung zur Überprüfung einer Oberfläche eines Körpers, insbesondere Lackoberflächen eines Kraftfahrzeuges, welche Einrichtung Bestandteil einer Inspektionsanlage ist, dadurch gekennzeichnet, daß die Einrichtung (1) seitliche Beleuchtungskörper (8, 9) umfaßt, die entlang von Längsseiten eines Bodens (5) angebracht sind, der zur Aufnahme eines einen Aufbau (4) aufweisenden Kraftfahrzeuges (3) ausgebildet ist, wobei Längsseiten (6, 7) des Aufbaus (4) auf die Beleuchtungskörper (8, 9) ausgerichtet sind und der Boden (5) mit einem buntdunklen Farbton sowie beabstandeten hellbunten Bodenlinien (Bl) versehen ist, die quer zu einer Fahrzeuglängsrichtung (A-A) verlaufen.

2. Einrichtung nach Anspruch 1, dadurch gkennzeichnet, daß der Farbton des Bodens (5) mattiert grau, vorzugsweise basaltgrau oder schiefergrau ist.

3. Einrichtung nach Anspruch 1, dadurch gekennzeichne,t daß die Bodenlinien (Bl) gelb sind.

4. Einrichtung nach Anspruch 1, dadurch gekennzeichnet, daß die Bodenlinien (Bl) zwischen 1,5 und 4,5 mm dick sind.

5. Einrichtung nach Anspruch 1, dadurch gekennzeichnet, daß der Abstand von zwei benachbarten Bodenlinien (Bl) zwischen 90 und 170 mm beträgt.

6. Einrichtung nach Anspruch 1, dadurch gekennzeichnet, daß die seitlichen Beleuchtungskörper (8, 9) mehrere Neonröhren (10, 11) aufweisen, die horizontal ausgerichtet und in einem Gehäuse (12) untergebracht sind.

7. Einrichtung nach Anspruch 6, dadurch gekennzeichnet, daß das Gehäuse (2) auf der dem Kraftfahrzeug (1) zugewandten Seite mit einer Milchglasscheibe (16) abgedeckt ist.

8. Einrichtung nach Anspruch 1, dadurch gekennzeichnet, daß die Einrichtung (1) oberhalb des Kraftfahrzeuges (3) eine Art Deckenbeleuchtung (17) aufweist.

9. Einrichtung nach Anspruch 8, dadurch gekennzeichnet, daß die Deckenbeleuchtung (17) beabstandete Beleuchtungskörper (8) umfaßt, die sich quer zur Fahrzeuglängsrichtung (A-A) erstrecken.

10. Einrichtung nach Anspruch 9, dadurch gekennzeichnet, daß die Beleuchtungskörper (17) Neornröhren (18) aufweisen.

11. Einrichtung nach den Ansprüchen 9 und 10, dadurch gekennzeichnet, daß die Beleuchtungskörper (17) in gleichen und/oder ungleichen Abständen zueinander angeordnet sind.
